# EUROPÄISCHE PATENTSCHRIFT

(11) **EP 0 794 695 B1**
(45) Veröffentlichungstag und Bekanntmachung des Hinweises auf die Patenterteilung: **05.07.2000**
(21) Anmeldenummer: 97103491.3
(22) Anmeldetag: 04.03.1997
(51) Int. Cl.: H05B 41/288

(54) **Schaltung zum Betrieb einer Hochdruckgasentladungslampe**
Circuit for operating a high pressure discharge lamp
Circuit pour alimenter une lampe à décharge à hautepression

(30) Priorität: 06.03.1996 DE 19608657
(43) Veröffentlichungstag der Anmeldung: 10.09.1997
(73) Patentinhaber: ROBERT BOSCH GMBH, 70442 Stuttgart (DE)
(72) Erfinder: Schmiederer, Claus, 77871 Renchen (DE)

(56) Entgegenhaltungen:
- EP-A- 0 059 064
- EP-A- 0 408 121
- EP-A- 0 411 617
- DE-A- 3 303 374
- US-A- 5 138 236
- US-A- 5 469 027

## Beschreibung

### Stand der Technik

Die Erfindung geht aus von einer Schaltung zum Betrieb einer Hochdruckgasentladungslampe.

Beispiele solcher Schaltungen können folgenden Druckschrifften entnommen werden.

Die EP 0 477 621 A1 beschreibt eine Schaltungsanordnung zum Betrieb einer Hochdruckgasentladungslampe, die über eine Brückenschaltung mit hochfrequenter Brennenergie versorgt wird, wobei die Brückenschaltung zumindest einen Zweig mit zwei gesteuerten Schalttransistoren enthält. Die Hochdruckgasentladungslampe ist dabei parallel zu einem der Kondensatoren geschaltet, der zusammen mit einem weiteren Kondensator und einer zu beiden in Reihe liegenden Spule einen Reihenresonanzkreis bildet. Dieser Reihenresonanzkreis dient zum Zünden der Hochdruckgasentladungslampe, wenn er auf Resonanz erregt wird. Der Brennbetrieb wird mit Hochfrequenz betrieben. Nach der Zündung ändern sich die Kapazitäten und der Reihenresonanzkreis ist nicht mehr in Resonanz. In Abhängigkeit von der Lampenspannung wird die Zündfrequenz von etwa 100 kHz auf die Brennfrequenz von etwa 10 kHz abgesenkt.

Die Hochdruckgasentladungslampe ist bei dieser bekannten Anordnung unmittelbar mit dem Resonanzkondensator verbunden, der ausschließlich beim Zünden als solcher wirkt. Im Betrieb liegt keine Resonanz vor. Die Speisung der Hochdruckgasentladungslampe erfolgt nicht aus dem Brückenzweig. Im Gegensatz dazu wird bei der Erfindung der Reihenresonanzkreis über einen Transformator im Betrieb mit der Hochdruckgasentladungslampe verbunden, was zu wesentlich besserer Energieausnutzung führt und die Speisung der Hochdruckgasentladungslampe erfolgt aus dem Brückenzweig.

Die EP 0 440 244 A2 beschreibt eine Schaltungsanordnung zum Betrieb einer Gasentladungslampe mit einer Brückenschaltung, bei der gesteuerte Schalttransistoren die Lampe über den Brückenzweig der Brückenschaltung mit Brennenergie versorgen. Im Brückenzweig ist die Primärwicklung eines Transformators in Reihe mit einer Spule sowie parallel zur Primärwicklung und in Reihe mit der Spule ein Kondensator vorgesehen, wodurch ein Reihenresonanz-Konverter mit primärseitigem Resonanzkreis gebildet ist. Die Lampe ist in Reihe mit der Sekundärwicklung des Transformators angeordnet und wird von ihr mit hochfrequenter Brennenergie versorgt. Zur Zündung der Lampe wird der Reihenresonanzkreis durch entsprechende Steuerung der Schalttransistoren mit Hochfrequenz in Resonanz versetzt. Beim Betrieb liegt auch hier kein Resonanzbetrieb vor. Außerdem wird diese bekannte Schaltungsanordnung zum Zünden und zum Betreiben von Lampen benutzt, die als Leuchtstofflampen bekannt sind. Es handelt sich hier also um die Anwendung bei einer ganz anderen Lampenart als bei der Erfindung. Eine Übertragung auf eine andere bekannte Schaltung, um damit zu vorliegender Erfindung zu gelangen, ist daher nicht ohne erheblichen und erfinderischen Änderungsaufwand möglich.

Aus dem Dokument EP-A-411 617 ist eine Schaltung bekannt, bei der eine Entladungslampe, insbesondere eine Hochspannungs-Entladungslampe mit einer gesteuerten Brückenschaltung verbunden und von ihr mit Betriebsenergie versorgt ist. Gleichzeitig ist parallel zur Entladungslampe eine Zündvorrichtung vorgesehen, durch die die Lampe derart gezündet wird, daß eine Glimmentladung entsteht. Diese Glimmentladung wird durch den Zündkreis aufrecht erhalten. Nachdem dieser Status erreicht ist, wird der Versorgungskreis für den Betrieb der Lampe bei Rückgang der Impedanz der Entladungslampe gestartet. Der Zweck dieser Art des Betriebes ist der, daß die Transistoren in der Versorgungsbrücke erst dann in Betrieb kommen, wenn sie ohne große Schaltverluste zu betreiben sind. Gerade bei Hochdruckgasentladungslampen, wie sie insbesondere in Scheinwerferlampen von Kraftfahrzeugen eingesetzt werden, ist es von besonderer Bedeutung, daß diese Lampen ohne eine Glimmentladung sofort Licht spenden. Neben der Tatsache, daß die in diesem Dokument beschriebene Schaltung bei einer ganz anderen Lampenart als bei der Erfindung angewandt wird, ist es bei Hochdruckgasentladungslampen gemäß der Erfindung ganz wesentlich, daß diese ohne Zeitverzögerung sofort in ihre Licht spendende Entladungsphase hineingezündet werden. In diese Richtung läßt sich diesem Dokument keinerlei Hinweis entnehmen.

Dokument US-A-5 138 236 beschreibt im Gegensatz zur Erfindung eine Schaltung zum Betrieb einer Leuchtstofflampe. In dieser Schaltung ist eine H-Brückenschaltung mit zwei Schalttransistoren im ersten und zwei Kondensatoren im zweiten Zweig der Brückenschaltung vorgesehen. Ein Brückenzweig enthält die Primärwicklung eines Transformators, mit der eine Spule in Reihe und zu der ein Kondensator parallel geschaltet ist. An die Sekundärwicklung des Transformators wird die Leuchtstofflampe angeschlossen.

Dokument EP-A-408 121 beschreibt eine Schaltung zum Betrieb einer Hochdruckgasentladungslampe mit einem Autotransformator im Brückenzweig. Dort ist für die Zündung der Lampe die Anregung eines Reihenschwingkreises vorgesehen, um die Lampe mit Hochfrequenz zu zünden. Der Betrieb der Hochdruckgasentladungslampe erfolgt mit Niederfrequenz von etwa 250 Hz.

Aus der DE 37 29 383 A1 ist eine Schaltung zum Betrieb einer Hochdruckgasentladungslampe bekannt, die eine Brückenschaltung enthält, bei der in zumindest einem Zweig zwei gesteuerte Schalttransistoren angeordnet sind, und bei der die Hochdruckgasentladungslampe über den Brückenzweig der Brückenschaltung mit Brennenergie versorgt wird.

Bei dieser bekannten Schaltungsanordnung liegt die Hochdruckgasentladungslampe direkt im Brückenzweig einer als kapazitiver Halbbrücke ausgeführten Brückenschaltung, wobei in Reihe mit der Lampe noch eine Drosselspule angeordnet ist. Des weiteren ist in Reihe mit dieser Anordnung die Sekundärwicklung eines Zündtransformators vorgesehen. Der Versorgungsstrom der Lampe wird durch Veränderung des Tastverhältnisses der Schalttransistoren geregelt und beim Start in bestimmter Weise verändert. Die Impulsfrequenz der bipolaren Versorgungsimpulse beträgt z.B. bei Natriumdampflampen etwa 300 Hz, der noch eine höherfrequente Spannung zwischen 30 und 70 kHz überlagert ist. Das Starttastverhältnis ist auf etwa 0,7 und das Betriebstastverhältnis auf etwa 0,5 eingestellt.

Aus dieser bekannten Schaltungsanordnung ist nicht zu entnehmen, ob sie für den Start und den Betrieb von solchen Hochdruckgasentladungslampen Verwendung findet oder verwendet werden kann, die in Kraftfahrzeuge eingebaut werden können und die aus dem Gleichspannungsbordnetz niedriger Spannungswerte, z.B. 6 oder 12 Volt, versorgt werden.

Generell ist zu dieser bekannten Schaltungsanordnung jedoch zu sagen, daß die verwendeten Bauelemente zum einen sehr zahlreich sind und daß zum anderen die verwendeten Bauelemente selbst in sich groß sind bzw. sein müssen, da sie für den Betrieb bei niedrigen Frequenzen ausgelegt sein müssen. Dies steht einem möglichst kostengünstigen Bau und Betrieb einer derartigen Schaltungsanordnung für den Start und den Betrieb einer Hochdruckgasentladungslampe nachteilig entgegen.

Es sind Hochdruckgasentladungslampen für den Betrieb in Kraftfahrzeugen auf dem Markt, die nach zwei verschiedenen Prinzipien arbeiten. Bei dem einen Prinzip wird sowohl der Start als auch der Betrieb im sogenannten Resonanzbetrieb durchgeführt. Dabei liegt die Startfrequenz, also beim Zünden der Lampe, bei etwa 80 kHz und die Brenn- oder Betriebsfrequenz liegt bei etwa 8 bis 16 kHz. Bei dem anderen Prinzip wird die Lampe im sogenannten wackelnden Gleichstrombetrieb betrieben, d.h. der Gleichstrom wird immer wieder umgepolt. Die Umpolfrequenz beträgt etwa 400 Hz. Die Zündung der Lampe erfolgt über einen separaten Impulszünder. Die unter dem Begriff ,,Litronic" auf dem Markt befindlichen, verwendeten Lampen sind sogenannte Xenonlampen oder Metallhalogenidlampen, deren Hochdruck bei etwa 80 bar liegt. Zum Zünden des Lichtbogens ist im Hinblick auf schlechteste Toleranzbedingungen eine Hochspannung von 24 kV notwendig. Im Brennbetrieb liegt die nötige Spannung bei etwa 85 Volt.

Prinzipielle Nachteile bei diesen beiden Prinzipien liegen darin begründet, daß auch hier relativ viele Bauteile und eine besondere Zündvorrichtung nötig sind und darüber hinaus die Bauteile recht groß sind und hochspannungsfest sein müssen. Dadurch sind in nachteiliger Weise relativ hohe Kosten, recht hohe Verlustleistungen und erheblicher Raumbedarf gegeben.

In EP-A-794 694 betreffend eine "Schaltungsanordnung zum Betrieb einer Hochdruckgasentladungslampe" der Anmelderin, die gleichzeitig mit vorliegender Anmeldung eingereicht wird, ist vorgesehen, daß im Brückenzweig einer Brückenschaltung die Primärwicklung eines Transformators angeordnet ist, auf der Sekundärseite des Transformators ein Schwingkreis angeordnet ist, die Hochdruckgasentladungslampe von dem sekundärseitigen Schwingkreis mit Brenn- und Zündenergie versorgt wird, und sowohl der Brennbetrieb als auch der Zündvorgang mit Hochfrequenz betrieben wird, wobei die Frequenz der Zündung wesentlich höher gewählt ist als die Frequenz beim Brennbetrieb. Die hier vorliegende Erfindung beschreitet einen prinzipiell anderen vorteilhaften Weg.

Die Aufgabe der Erfindung besteht, insbesondere ausgehend von der Druckschrift EP 0 477 621 A1, darin, eine demgegenüber vereinfachte Schaltung anzugeben, in der kleinere und verlustärmere Bauelemente verwendet werden können, um Aufwand und Kosten zu senken, dies bei gleichzeitiger Erhöhung der Flexibilität in der Steuerung.

### Vorteile der Erfindung

Die erfindungsgemäße Schaltung zum Betrieb einer Hochdruckgasentladungslampe mit den kennzeichnenden Merkmalen des Anspruchs 1 hat demgegenüber den Vorteil der kleinen Bauelemente aufgrund der Tatsache der angewandten Hochfrequenz und den Vorteil nur niederspannungsfeste Schalttransistoren einsetzen zu können. Weiterhin erfordert die erfindungsgemäße Schaltung weniger Bauelemente und erzeugt weniger Verlustleistung. Damit ist sowohl der Raumbedarf verkleinert als auch der Kostenaufwand erheblich erniedrigt.

Gemäß der Erfindung wird dies prinzipiell erreicht dadurch, daß die Hochdruckgasentladungslampe über den Brückenzweig der Brückenschaltung mit Brennenergie versorgt wird, im Brückenzweig der Brückenschaltung die Primärwicklung eines Transformators angeordnet ist, in Reihe mit dieser Primärwicklung eine Spule, sowie parallel zur Primärwicklung und in Reihe mit der Spule ein Kondensator vorgesehen ist, wodurch ein Reihenresonanz-Konverter mit primärseitigem Resonanzkreis gebildet ist, die Hochdruckgasentladungslampe in Reihe mit der Sekundärwicklung des Transformators angeordnet ist und von ihr mit Brennenergie versorgt wird, zur Steuerung der Schalttransistoren ein Mikrokontroller vorgesehen ist, der die notwendigen Steuerimpulsfolgen generiert, die Betriebsfrequenz der Hochdruckgasentladungslampe im Bereich von einigen 10 bis einigen 100 kHz gewählt ist und die Anregung des Reihenresonanz-Konverters über die Steuerimpulse der Schalttransistoren erfolgt.

Durch die in den weiteren Ansprüchen niedergelegten Maßnahmen sind vorteilhafte Weiterbildungen und Verbesserungen der im Anspruch 1 angegebenen Schaltungsanordnung möglich.

Gemäß einer besonders vorteilhaften Ausgestaltung der Erfindung ist auf der Sekundärseite des Transformators und parallel zur Hochdruckgasentladungslampe eine Zündvorrichtung für diese vorgesehen.

Die erfindungsgemäße Schaltung kann in zwei vorteilhaften alternativen Brückenschaltungen realisiert werden und zwar kann die Brückenschaltung zum einen als kapazitive Halbbrücke, bei der in einem Zweig zwei gesteuerte Schalttransistoren und im anderen Zweig zwei Kondensatoren vorgesehen sind, oder zum anderen als Vollbrücke, bei der in jedem Zweig jeweils zwei gesteuerte Schalttransistoren vorgesehen sind, ausgebildet sein. In zweckmäßiger und vorteilhafter Weise erfolgt die Steuerung so, daß ein Querstrom in den gesteuerten Schalttransistoren vermieden ist.

In zweckmäßiger Weiterbildung der erfindungsgemäßen Schaltung ist ein ASIC mit dem Mikrokontroller verbunden, um die anwendungsspezifische Anpassung an das jeweilige Steuerungsprofil zur Verfügung zu stellen.

Gemäß einer vorteilhaften Weiterbildung der Erfindung erfolgt die Regelung der Leistung der Hochdruckgasentladungslampe mittels Impulspaketsteuerung, wobei die Änderung der Leistung durch Änderung der in dem jeweiligen Impulspaket enthaltenen Anzahl von diskreten Impulsen erfolgt, und daß die Schaltung der Schalttransistoren jeweils im Nulldurchgang des Stromes durchgeführt wird.

Eine besonders zweckmäßige Weiterbildung der Erfindung sieht vor, daß zur Vermeidung der Hochfrequenzeinstreuungen in das Gleichspannungsversorgungsnetz, insbesondere das Bordnetz eines Kraftfahrzeuges, ein Querkondensator und ggf. eine Längsinduktivität vorgesehen ist. Des weiteren ist es von besonderem Vorteil, einen Verpolschutz vorzusehen, wobei der Verpolschutz vorzugsweise einen Transistor mit niedriger Sättigungsspannung enthält, insbesondere einen invers betriebenen MOSFET Transistor.

In vorteilhafter Ausgestaltung ist bei der erfindungsgemäßen Schaltung zur Verminderung der dynamischen Schaltverluste und zur Erhöhung der möglichen Betriebsfrequenz vorgesehen, als gesteuerte Schalttransistoren in der Brückenschaltung MOSFET Transistoren zu verwenden. Fallweise können auch bipolare Transistoren Verwendung finden.

### Zeichnung

Die Erfindung ist anhand zweier in der Zeichnung dargestellter Ausführungsbeispiele in der nachfolgenden Beschreibung näher erläutert. Es zeigt:
- Fig. 1: schematisch ein Blockschaltbild der erfindungsgemäß gestalteten Schaltung zum Betrieb einer Hochdruckgasentladungslampe, wobei eine kapazitive Halbbrücke vorgesehen ist, und
- Fig. 2: schematisch ein Blockschaltbild der erfindungsgemäß gestalteten Schaltung zum Betrieb einer Hochdruckgasentladungslampe, wobei eine Vollbrücke vorgesehen ist.

### Beschreibung der Ausführungsbeispiele

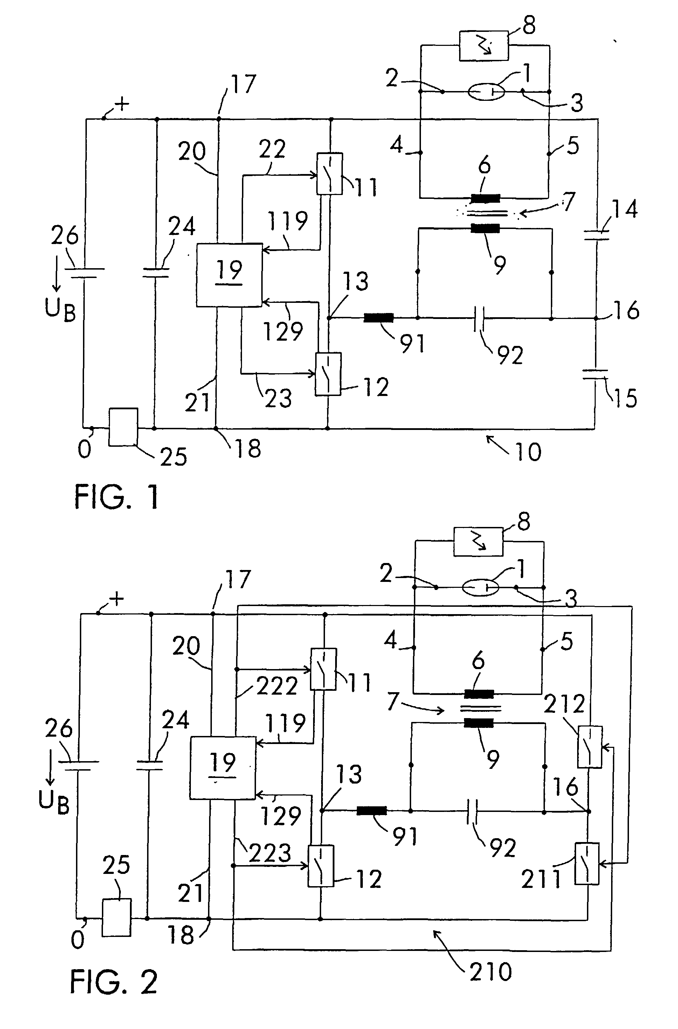

In Fig. 1 ist anhand eines schematischen Blockschaltbildes die erfindungsgemäß gestaltete Schaltung zum Betrieb einer Hochdruckgasentladungslampe dargestellt. Eine Hochdruckgasentladungslampe 1 ist mit ihren Elektroden 2 und 3 an die beiden Enden 4 und 5 der Sekundärwicklung 6 eines Transformators 7 angeschlossen. Zwischen den Elektroden 2 und 3 ist parallel zur Hochdruckgasentladungslampe 1 eine Zündvorrichtung 8 geschaltet. Die Hochdruckgasentladungslampe 1 wird nach dem Starten bzw. Zünden durch die Zündvorrichtung 8 von der Sekundärwicklung 6 des Transformators 7 her mit Brennenergie versorgt.

Die Primärwicklung 9 des Transformators 7 liegt im Brückenzweig 13-16 einer Brückenschaltung. Entsprechend der erfindungsgemäßen Schaltung ist in Reihe mit dieser Primärwicklung 9 des Transformators 7 eine Spule 91 angeordnet, sowie parallel zur Primärwicklung 9 und in Reihe mit der Spule 91 ein Kondensator 92. Dadurch ist ein Reihenresonanz-Konverter mit primärseitigem Resonanzkreis gebildet.

Die in Fig. 1 dargestellte Brückenschaltung 10 ist eine sogenannte kapazitive Halbbrücke, bei der in einem Zweig, hier in dem linken, zwei gesteuerte Schalttransistoren 11 und 12 als Schaltelemente angeordnet sind. Der Verbindungspunkt 13 der beiden Transistoren 11 und 12 bildet den einen Anschluß des Brückenzweiges. Im anderen Zweig, hier im rechten, sind zwei Kondensatoren 14 und 15 angeordnet. Der Verbindungspunkt 16 der beiden Kondensatoren 14 und 15 bildet den zweiten Anschluß des Brückenzweiges. In diesem Brückenzweig liegt zwischen den Anschlüssen 13 und 16 die bereits erwähnte Primärwicklung 9 des Transformators 7. Schalttransistor 11 und Kondensator 14 sind am Anschluß 17 miteinander verbunden und an den Pluspol + einer Versorgungsspannungsquelle, beispielsweise der Batterie 26 eines Kraftfahrzeuges angeschlossen. Schalttransistor 12 und Kondensator 15 sind am Anschluß 18 miteinander verbunden und an das Erdpotential 0 der Versorgungsspannungsquelle angeschlossen.

Zwischen Pluspol + und Erdpotential 0 liegt über der Batterie 26 die Batteriespannung U_{B} an. Ein Mikrokontroller 19 ist mit seinen Anschlüssen 20 und 21 an den Pluspol + bzw. das Erdpotential 0 der Versorgungsspannung U_{B} angeschlossen. Steuerausgänge 22 und 23 des Mikrokontrollers 19 sind auf die Steuereingänge der zugehörigen gesteuerten Schalttransistoren 11 bzw. 12 geführt. Zur Vermeidung von Hochfrequenzeinstreuung in das Bordnetz über die Anschlüsse + und 0 ist ein Querkondensator 24 vorgesehen. Weiterhin kann ggf. zu diesem Zweck auch noch eine Längsinduktivität vorgesehen sein, die jedoch in den Figuren nicht dargestellt ist. Weiterhin ist zweckmäßigerweise ein Verpolschutz 25 vorgesehen. Dieser Verpolschutz 25 enthält vorzugsweise nicht nur eine Verpolschutzdiode, sondern einen Transistor mit niedriger Sättigungsspannung, insbesondere einen invers betriebenen MOSFET Transistor, um die Verluste am Verpolschutz zu minimieren.

Die im Ausführungsbeispiel der Fig. 2 dargestellte sogenannte Vollbrücke 210 enthält anstelle der beiden Brückenkondensatoren 14 und 15 zwei als Schalter verwendete Schalttransistoren 212 und 211. Steuerleitungen 222 und 223 des Mikrokontrollers 19 sind auf die Steuereingänge der Schalttransistoren 11 und 211 bzw. 12 und 212 geführt, um diese kreuzweise leitend bzw. sperrend zu schalten. Ansonsten stimmt dieses Ausführungsbeispiel mit dem in Fig. 1 dargestellten und vorstehend beschriebenem überein.

In beiden Ausführungsbeispielen ist zwischen dem Schalttransistor 11 und dem Mikrokontroller 19 eine Fühlleitung 119 für den Strom im Schalttransistor 11 bzw. zwischen dem Schalttransistor 12 und dem Mikrokontroller 19 eine Fühlleitung 129 für den Strom im Schalttransistor 12 vorgesehen. In vorteilhafter Weise erfolgt die Regelung der Leistung der Hochdruckgasentladungslampe 1 mittels Impulspaketsteuerung. Die Änderung der Leistung wird durch Änderung der in dem jeweiligen Impulspaket enthaltenen Anzahl von diskreten Impulsen bewirkt. Die Schaltung der Schalttransistoren 11 und 12 bzw. 11 mit 211 und 12 mit 212 wird jeweils im Nulldurchgang des Stromes durchgeführt. Diese Nulldurchgänge des Stromes werden auf den Fühlleitungen 119 und 129 des Mikrokontrollers 19 festgestellt.

Die Arbeitsweise und weitere Details der erfindungsgemäßen Schaltung sowie vorteilhafte und zweckmäßige Ausgestaltungen und Weiterbildungen werden in Folgenden beschrieben.

Die Hochdruckgasentladungslampe 1 wird über den Reihenschwingkreis auf der Primärseite des Transformators 7 betrieben, d.h. mit Brennenergie versorgt. Dieser Reihenschwingkreis wird aus der Induktivität der Spule 91 und der Kapazität des Kondensators 92 gebildet. Die Primärwicklung 9 des Transformators 7, die parallel zum Kondensator 92 liegt, transformiert dessen Spannung im gewählten Übersetzungsverhältnis auf die Sekundärseite 6 des Transformators 7. Der Reihenschwingkreis 91 und 92 wird entweder über den gesteuerten Schalttransistor 11 mit der positiven Spannung + U_{B} verbunden oder über den gesteuerten Schalttransistor 12 mit dem Erdpotential 0. Der Reihenschwingkreis wird mit der Taktfrequenz angeregt, mit welcher die komplementär taktenden Schalttransistoren 11 und 12 geschaltet werden. Diese Taktfrequenz wird über die Steuerleitungen 22 und 23 in Fig. 1 bzw. 222 und 223 in Fig. 2 vom Mikrokontroller 19 auf die entsprechenden Schalttransistoren gegeben und entspricht der Resonanzfrequenz des Reihenschwingkreises.

Nach dem Einschalten des Schalttransistors 11 ist die linke Seite des Reihenschwingkreises mit + U_{B} der Batterie 26 verbunden. Strom fließt von der Batterie 26 mit einer sinusförmigen Kurvenform in den Reihenresonanzkreis. Der Schalttransistor 11 bleibt durchgeschaltet bis der erste Stromnulldurchgang erreicht wird. Bei Strom Null wird der Schalttransistor 11 ausgeschaltet und der Schalttransistor 12 eingeschaltet. Es wiederholt sich der gleiche Ablauf mit umgekehrter Stromrichtung. Die im Resonanzfall über den Blindwiderständen der Spule 91 und des Kondensators 92 auftretende Spannungsüberhöhung wird durch den zum Kondensator 91 parallel liegenden Transformator 7 hochtransformiert und steht der Hochdruckgasentladungslampe 1 als Brennspannung zur Verfügung.

Die Zündung der Hochdruckgasentladungslampe 1 erfolgt über die Zündvorrichtung 8. In den dargestellten Ausführungsbeispielen der Fig. 1 und 2 ist diese parallel zur Hochdruckgasentladungslampe 1 angeordnet. Es ist jedoch auch möglich, eine Zündvorrichtung in Reihe mit der Hochdruckgasentladungslampe 1 vorzusehen. Die Zündvorrichtung 8 ist ein Hochspannungszünder, der die zum Starten notwendige Hochspannung aufbringt. Die beim Zündvorgang auf die Primärseite 9 des Transformators 7 übertragende Sannung wird durch den Kondensator 92 kurzgeschlossen. Zum Schutz der Schaltungselemente vor Beschädigung durch Spannungstransienten, ist beispielsweise mittels der Steuerung durch den Mikrokontroller 19 beim Zündvorgang dafür gesorgt, daß der Schalttransistor 11 in Fig. 1 bzw. 11 und 211 in Fig. 2, hochohmig, d.h. gesperrt, und der Schalttransistor 12 in Fig. 1 bzw. 12 und 212 in Fig. 2, niederohmig, d.h. leitend ist. Somit ist dafür Sorge getragen, daß über dem Schalttransistor 11 bzw. 11 und 211 maximal die Spannung U_{B} der Batterie 26 ansteht.

Durch geeignete Ansteuerung der Steuereingänge 22 und 23 der Schalttransistoren 11 und 12 seitens des Mikrokontrollers 19 bzw. der Steuereingänge 222 und 223 in Fig. 2, wird also aus der Batteriespannung U_{B} des Bordnetzes auf der Primärseite 9 des Transformators 7 eine Wechselspannung erzeugt. Diese wird auf die Sekundärseite 6 transformiert und versorgt die Hochdruckgasentladungslampe 1 mit der nötigen Betriebsspannung.

Die dynamische Verlustleistung in den gesteuerten Schalttransistoren 11 und 12 bzw. 211 und 212 ist proportional zur Schaltfrequenz, wodurch sich gegebenenfalls eine Begrenzung der höchstzulässigen Betriebsfrequenz ergibt. Um hier den Gegebenheiten bestens Rechnung zu tragen, werden als Schalttransistoren vorzugsweise MOSFET Transistoren verwendet. In besonders gelagerten Fällen können auch bipolare Transistoren Verwendung finden.

Die Regelung der Leistung der Hochdruckgasentladungslampe 1, beispielsweise auf 35 W, kann in vorteilhafter Weise durch Impulspaketsteuerung erfolgen. Dazu wird das Verhältnis der Anzahl der angeregten Schwingungen zu der Pausenzeit, in der die Schalttransitoren jeweils hochohmig sind, geregelt. In dieser genannten Pausenzeit schwingt der Resonanzkreis also ab. Dies wird durch geeignetes Timing, d.h. zeitlich richtig gewähltes Ein-/Ausschalten im Takt der Resonanzfrequenz im Verhältnis zum gleichzeitigen gänzlichen Sperren beider gesteuerter Schalttransistoren 11 und 12 sichergestellt, wobei nur in den Nulldurchgängen des Stromes geschaltet wird, um die Verlustleistung so klein wie irgend möglich zu halten.

Die Steuer- und Regelimpulse für die Schalttransistoren 11 und 12 bzw. 11 und 211 sowie 12 und 212, werden dabei in zweckmäßiger Weise so auf deren Steuereingänge 22 und 23 bzw. 222 und 223 gegeben, daß kein Querstrom durch die beiden Schalttransistoren 11 und 12 bzw. Paare von Schalttransistoren 11 mit 211 und 12 mit 212 fließt. Für die genaue Abgabe und Festlegung der Steuerimpulse ist gemäß der Erfindung in vorteilhafter Weise der Mikrokontroller 19 vorgesehen. In ihm sind alle notwendigen Impulsfolgen abgelegt und alle weiteren notwendigen Einflußparameter berücksichtigt. So werden insbesondere die Stromnulldurchgänge im Reihenresonanzkreis, der in der Hochdruckgasentladungslampe 1 fließende Strom und die dort anliegende Spannung vom Mikrokontroller erfaßt und in einen geeigneten Algorithmus für die Leistungsregelung eingebracht. Durch passende Programmierung kann über Software das System an die jeweilige Anwendung angepaßt werden. Zur Vermeidung einer stabilisierten Versorgungsspannung für den Mikrokontroller 19 wird ein solcher eingesetzt, der einen ausreichend großen Betriebsspannungsbereich aufweist. Die Anpassung des Mikrokontrollers 19 an die notwendigerweise hochfrequenten Impulsfolgen, die der HF-Betrieb erfordert, erfolgt über eine kunden- bzw. anwendunsspezifische Integration der Peripherie auf dem Mikrokontroller oder einen ASIC neben dem Mikrokontroller.

Die erfindungsgemäß gestaltete Schaltung zum Betrieb einer Hochdruckgasentladungslampe erfordert vorteilhafterweise wenig Bauelemente, von denen darüber hinaus insbesondere die nur nötige Niederspannungsfestigkeit der Schalttransistoren von besonderem Vorteil ist. Die angewandte Hochfrequenz für die Betriebsfrequenz wird aus einer niedrigen Gleichspannung gewonnen und liegt zwischen einigen 100 kHz und ca. 1,5 MHz. Dadurch können sowohl in sich kleinere, als auch vielfach kostengünstigere Bauelemente Verwendung finden. Der nötige Raumbedarf sowie der Kostenaufwand wird somit gesenkt. Dies alles führt zu einem erhöhten Qualitätsniveau und damit auch zu einer erhöhten Zuverlässigkeit bei langer Lebensdauer und günstigen Kosten.

## Patentansprüche

1. Schaltung mit einer Hochdruckgasentladungslampe (1) und enthaltend eine Brückenschaltung (10, 210), bei der in zumindest einem Zweig zwei gesteuerte Schalttransistoren (11, 12) angeordnet sind, welche die Hochdruckgasentladungslampe (1) mit Brennenergie versorgen, und der Brennbetrieb mit Hochfrequenz betrieben wird, die Hochdruckgasentladungslampe (1) über den Brückenzweig der Brückenschaltung (10, 210) mit Brennenergie versorgt wird, im Brückenzweig (13-16) der Brückenschaltung (10, 210) die Primärwicklung (9) eines Transformators (7) angeordnet ist, in Reihe mit dieser Primärwicklung (9) eine Spule (91), sowie parallel zur Primärwicklung (9) und in Reihe mit der Spule (91) ein Kondensator (92) vorgesehen ist, wodurch ein Reihenresonanz-Konverter mit primärseitigem Resonanzkreis gebildet ist, die Hochdruckgasentladungslampe (1) in Reihe mit der Sekundärwicklung (6) des Transformators (7) angeordnet ist und von ihr mit Brennenergie versorgt wird, zur Steuerung der Schalttransistoren (11, 12; 211, 212) ein Mikrokontroller (19) vorgesehen ist, der die notwendigen Steuerimpulsfolgen nur während des Brennbetriebs generiert, die Betriebsfrequenz während des Brennbetriebs der Hochdruckgasentladungslampe (1) im Bereich von einigen 100 kHz bis ca. 1,5 MHz gewählt ist und die Anregung des Reihenresonanz-Konverters über die Steuerimpulse der Schalttransistoren (11, 12; 211, 212) erfolgt.

2. Schaltung nach Anspruch 1, dadurch gekennzeichnet, daß auf der Sekundärseite (6) des Transformators (7) und parallel zur Hochdruckgasentladungslampe (1) eine Zündvorrichtung (8) für diese vorgesehen ist.

3. Schaltung nach Anspruch 1 oder 2, dadurch gekennzeichnet, daß die Brückenschaltung (10) als kapazitive Halbbrücke, bei der in einem Zweig zwei gesteuerte Schalttransistoren (11, 12) und im anderen Zweig zwei Kondensatoren (14, 15) vorgesehen sind, oder als Vollbrücke (210), bei der in jedem Zweig jeweils zwei gesteuerte Schalttransistoren (11, 12 bzw. 211, 212) vorgesehen sind, ausgebildet ist.

4. Schaltung nach Anspruch 1, 2 oder 3, dadurch gekennzeichnet, daß die Steuerung so erfolgt, daß ein Querstrom in den gesteuerten Schalttransistoren (11, 12; 211, 212) vermieden ist.

5. Schaltung nach Anspruch 1 oder einem der Ansprüche 2 - 4, dadurch gekennzeichnet, daß ein ASIC mit dem Mikrokontroller (19) verbunden ist, um die anwendungsspezifische Anpassung an das jeweilige Steuerungsprofil zur Verfügung zu stellen.

6. Schaltung nach einem der vorigen Ansprüche, dadurch gekennzeichnet, daß die Regelung der Leistung der Hochdruckgasentladungslampe (1) mittels Impulspaketsteuerung erfolgt, wobei die Änderung der Leistung durch Änderung der in dem jeweiligen Impulspaket enthaltenen Anzahl von diskreten Impulsen erfolgt, und daß die Schaltung der Schalttransistoren (11, 12; 211, 212) jeweils im Nulldurchgang des Stromes durchgeführt wird.

7. Schaltung nach einem der vorigen Ansprüche, dadurch gekennzeichnet, daß zur Vermeidung von Hochfrequenzeinstreuungen in das Gleichspannungsversorgungsnetz (+, 0), insbesondere das Bordnetz eines Kraftfahrzeuges, ein Querkondensator (24) und ggf. eine Längsinduktivität vorgesehen ist.

8. Schaltung nach einem der vorigen Ansprüche, dadurch gekennzeichnet, daß ein Verpolschutz (25) vorgesehen ist, wobei der Verpolschutz (25) vorzugsweise einen Transistor mit niedriger Sättigungsspannung, insbesondere einen invers betriebenen MOSFET Transistor, enthält.

9. Schaltung nach einem der vorigen Ansprüche, dadurch gekennzeichnet, daß als gesteuerte Schalttransistoren (11, 12; 211, 212) in der Brückenschaltung (10, 210) MOSFET-Transistoren oder bipolare Transistoren vorgesehen sind.

## Claims

1. Circuit having a high-pressure gas discharge lamp (1) and containing a bridge circuit (10, 210) in which there are arranged in at least one arm two controlled switching transistors (11, 12) which supply the high-pressure gas discharge lamp (1) with burning energy, and the burning operation is conducted at high frequency, the high-pressure gas discharge lamp (1) is supplied via the bridge arm of the bridge circuit (10, 210) with burning energy, the primary winding (9) of a transformer (7) is arranged in the bridge arm (13-16) of the bridge circuit (10, 210), a coil (91) is provided in series with this primary winding (9), and a capacitor (92) is provided in parallel with the primary winding (9) and in series with the coil (91), as a result of which a series resonance converter with a primary-side resonant circuit is formed, a high-pressure gas discharge lamp (1) is arranged in series with the secondary winding (6) of the transformer (7) and is supplied by it with burning energy, there is provided for the purpose of controlling the switching transistors (11, 12; 211, 212) a microcontroller (19) which generates the required control pulse trains only during the burning operation, the operating frequency during the burning operation of the high-pressure gas discharge lamp (1) is selected in the range from 100 kHz to approximately 1.5 MHz, and the excitation of the series resonance converter is performed via the control pulses of the switching transistors (11, 12; 211, 212).

2. Circuit according to Claim 1, characterized in that arranged on the secondary side (6) of the transformer (7) and in parallel with the high-pressure gas discharge lamp (1) is a starting device (8) for the latter.

3. Circuit according to Claim 1 or 2, characterized in that the bridge circuit (10) is designed as a capacitive half bridge in the case of which two controlled switching transistors (11, 12) are provided in one arm and two capacitors (14, 15) are provided in the other arm, or as a full bridge (210) in the case of which two controlled switching transistors (11, 12 and 211, 212, respectively) are provided respectively in each arm.

4. Circuit according to Claim 1, 2 or 3, characterized in that controlling is performed such that a transverse current is avoided in the controlled switching transistors (11, 12; 211, 212).

5. Circuit according to Claim 1 or one of Claims 2-4, characterized in that an ASIC is connected to the microcontroller (19) in order to make the application-specific adaptation available to the respective control profile.

6. Circuit according to one of the preceding claims, characterized in that the power of the high-pressure gas discharge lamp (1) is controlled by means of pulse packet control, the power being changed by changing the number of discrete pulses contained in the respective pulse packet, and in that the switching transistors (11, 12; 211, 212) are switched in each case at the zero crossing of the current.

7. Circuit according to one of the preceding claims, characterized in that in order to avoid radiofrequency interference in the DC voltage supply system (+, 0), in particular the on-board system of a motor vehicle, a quadrature-axis capacitor (24) and, if appropriate, direct-axis inductor are provided.

8. Circuit according to one of the preceding claims, characterized in that a polarity reversal protection system (25) is provided, the polarity reversal protection system (25) preferably including a transistor with a low saturation voltage, in particular an inversely operated MOSFET transistor.

9. Circuit according to one of the preceding claims, characterized in that MOSFET transistors or bipolar transistors are provided as controlled switching transistors (11, 12; 211, 212) in the bridge circuit (10, 210).

## Revendications

1. Circuit comprenant une lampe à décharge de gaz à haute pression (1) et contenant un circuit en pont (10, 210), dans lequel sont disposés au moins dans une branche deux transistors de commutation commandés (11, 12), qui alimentent la lampe à décharge de gaz à haute pression (1) en énergie d'éclairage, et dans lequel on fait fonctionner l'éclairage à haute fréquence, on alimente la lampe à décharge de gaz à haute pression (1) par l'intermédiaire de la branche du circuit en pont (10, 210), on dispose dans la branche (13- 16) du circuit en pont (10, 210) l'enroulement primaire (9) d'un transformateur (7), et dans lequel on prévoit en série avec cet enroulement primaire (9) une bobine (91), ainsi qu'en parallèle à l'enroulement primaire (9) et en série avec la bobine (91) un condensateur (92),
caractérisé en ce que
on forme un convertisseur à résonance en série avec un circuit à résonance situé du côté primaire, on dispose la lampe à décharge de gaz à haute pression (1) en série avec l'enroulement secondaire (6) du transformateur (7) et on l'alimente par celui-ci en énergie d'éclairage, on prévoit pour commander les transistors de commutation (11, 12; 211, 212) un microcontrôleur (19), qui engendre les séries d'impulsions de commande nécessaires seulement quand l'éclairage est en fonctionnement, on choisit la fréquence de fonctionnement de la lampe à décharge de gaz à haute pression (1) dans la zone de quelques centaines de kHz jusqu'à environ 1,5 MHz et l'excitation du convertisseur à résonance en série a lieu au moyen des impulsions de commande des transistors de commutation (11, 12 ; 211, 212).

2. Circuit selon la revendication 1,
caractérisé en ce que
l'on prévoit sur le côté secondaire (6) du transformateur (7) et en parallèle à la lampe à décharge de gaz à haute pression (1) un dispositif d'allumage (8) pour celle-ci.

3. Circuit selon la revendication 1 ou la revendication 2,
caractérisé en ce que
le circuit en pont (10) est constitué sous la forme d'un demi pont capacitif, dans lequel sont prévus dans une branche deux transistors de commutation commandés (11, 12) et dans l'autre branche deux condensateurs (14, 15), ou est constitué sous la forme d'un pont complet (210), dans lequel dans chaque branche il est prévu respectivement deux transistors de commutation commandés (11, 12 ou 211, 212).

4. Circuit selon l'une des revendications 1, 2 ou 3,
caractérisé en ce qu'
un courant transversal est évité dans les transistors de commutation commandés (11, 12 ; 211, 212).

5. Circuit selon la revendication 1, ou l'une des revendications 2 à 4,
caractérisé en ce que
un bloc spécifique à l'application (ASIC) est relié au microcontrôleur (19), pour procurer à chaque profil de commande l'adaptation spécifique à l'application.

6. Circuit selon l'une des revendications précédentes,
caractérisé en ce que
- le réglage de la puissance de la lampe à décharge de gaz à haute pression (1) a lieu au moyen de la commande de paquets d'impulsions, la variation de la puissance ayant lieu en faisant varier le nombre des impulsions discrètes contenues dans le paquet d'impulsions correspondant, et
- le branchement des transistors de commutation (11, 12; 211, 212) est effectué chaque fois lors du passage par zéro du courant.

7. Circuit selon l'une des revendications précédentes,
caractérisé en ce que
pour éviter des interférences à haute fréquence dans le réseau d'alimentation sous tension continue (+, 0), en particulier dans le réseau de bord d'un véhicule automobile, il est prévu un condensateur transversal (24) et le cas échéant une inductance longitudinale.

8. Circuit selon l'une des revendications précédentes,
caractérisé en ce qu'
il est prévu une protection (25) contre une polarisation, qui de préférence contient un transistor avec une tension de saturation basse, en particulier un transistor à effet de champ à grille isolée par oxyde métallique (MOSFET), fonctionnant de manière inverse.

9. Circuit selon l'une des revendications précédentes,
caractérisé en ce que
les transistors de commutation commandés (11, 12 ; 211, 212) dans le circuit en pont (10, 210) sont des transistors à effet de champ à grille isolée par oxyde métallique (MOSFET), ou des transistors bipolaires.
